# EUROPÄISCHE PATENTSCHRIFT

(11) **EP 1 308 747 B1**
(45) Veröffentlichungstag und Bekanntmachung des Hinweises auf die Patenterteilung: **21.03.2007**
(21) Anmeldenummer: 02021120.7
(22) Anmeldetag: 23.09.2002
(51) Int. Cl.: G01S 7/481, G01S 7/497

(54) **Optoelektronische Erfassungseinrichtung**
Opto-electronic detecting device
Dispositif de détection opto-électronique

(30) Priorität: 22.10.2001 DE 10151981
(43) Veröffentlichungstag der Anmeldung: 07.05.2003
(73) Patentinhaber: IBEO Automobile Sensor GmbH, 22179 Hamburg (DE)
(72) Erfinder: Lages, Ulrich, Dr., 21031 Hamburg (DE); Willhoeft, Volker, 22303 Hamburg (DE)
(74) Vertreter: Manitz, Finsterwald & Partner GbR

(56) Entgegenhaltungen:
- EP-A- 0 636 903
- EP-A- 1 302 784
- DE-A- 2 833 635
- DE-A- 19 850 639
- DE-A- 19 945 268

## Beschreibung

Die Erfindung betrifft eine optoelektronische Erfassungseinrichtung mit zumindest einem während des Betriebs eine Abtastbewegung ausführenden Sensor zur Aussendung von insbesondere gepulster elektromagnetischer Strahlung in einen Überwachungsbereich und zum Empfang von aus dem Überwachungsbereich reflektierter Strahlung.

Derartige Erfassungseinrichtungen sind grundsätzlich bekannt und werden beispielsweise an Fahrzeugen angebracht, um während des Fahrbetriebs die Fahrzeugumgebung insbesondere zur Objekterkennung und -verfolgung zu erfassen.

Problematisch sind z.B. während des Betriebs auftretende Verschmutzungen, welche die Funktionsfähigkeit der Erfassungseinrichtung beeinträchtigen können.

Aus der nach dem Prioritätstag veröffentlichten EP 1 302 784 A2 ist eine bewegbare Schutzabdeckung für einen Sensor einer optoelektronischen Erfassungseinrichtung bekannt.

DE 198 50 639 A1 beschreibt eine an einem Fahrzeug angebrachte Radarantenne, der ein bewegbarer Film vorgelagert ist, welcher in zwei Betriebsmodi betrieben werden kann, nämlich entweder in einem Stillstandsmodus oder einem Bewegungsmodus, in welchem der Film permanent umläuft, wobei im Bewegungsmodus zwei Unterschiedliche Geschwindigkeiten möglich sind. Die Bewegbarkeit des Filmes dient dazu, die Außenseite des Filmes an Wischbürsten vorbeizubewegen. In Abhängigkeit von dem Ausmaß einer Verschmutzung der Außenseite des Filmes kann eine schnelle oder langsame Bewegung des Filmes gewählt werden.

Aus DE OS 28 33 635 ist eine Einrichtung zur Messung der Verschmutzung von optischen Grenzflächen, insbesondere bei optischen Sendern und/oder Empfängern bekannt.

EP 0 636 903 A1 beschreibt im Zusammenhang mit einer Einrichtung zur Abstandsmessung die Möglichkeit, im Fall einer Verschmutzung die Ausgangsleistung einer Laserdiode zu erhöhen.

Aufgabe der Erfindung ist es, eine optoelektronische Erfassungseinrichtung der eingangs genannten Art zu schaffen, bei der auf möglichst einfache Weise die Gefahr von Beeinträchtigungen der Funktionsweise beseitigt oder zumindest auf ein Minimum reduziert ist.

Die Lösung dieser Aufgabe erfolgt durch die Merkmale des Anspruchs 1.

Erfindungsgemäß ist eine separate Schutzabdeckung vorgesehen, die den Sensor zumindest teilweise umgibt. Die Schutzabdeckung kann relativ zum Sensor bewegt werden, um die Strahlungsausbreitung zumindest potentiell beeinträchtigende Störbereiche, die insbesondere durch Verschmutzungen oder Beschädigungen der Schutzabdeckung entstehen können, in eine Position zu überführen, in der diese Störbereiche die Ausbreitung der Strahlung nicht mehr beeinträchtigen. Erfindungsgemäß ist es nicht erforderlich, den Sensor selbst zu bewegen, um Störbereiche unschädlich zu machen. Ferner kann die Schutzabdeckung derart ausgebildet werden, daß keine zusätzlichen Maßnahmen erforderlich sind, um den Sensor vor äußeren Einflüssen zu schützen. Die gemäß der Erfindung relativ zum Sensor bewegbare Schutzabdeckung bietet somit nicht nur eine einfache und elegante Möglichkeit, durch Abschirmen des Sensors von der Außenwelt die Strahlungsausbreitung beeinträchtigende Störungen zu beseitigen, ohne in den Abtastbetrieb des Sensors eingreifen zu müssen, sondern dient außerdem als Schutzeinrichtung, die den Sensor vor schädlichen Umwelteinflüssen sowie mechanischen Beschädigungen schützt.

Bei den Störbereichen kann es sich um entfernbare oder um hartnäckige, auch mit Hilfe von Reinigungseinrichtungen nicht oder nur schwer beseitigbare Verschmutzungen handeln. Ferner können dauerhafte Störbereiche durch Beschädigungen der Schutzabdeckung hervorgerufen werden.

Die Verschmutzungen oder Beschädigungen können derart stark sein, daß der Sensor in diesen Bereichen "blind" ist, so daß durch die erfindungsgemäße Bewegbarkeit der Schutzabdeckung die Funktionsfähigkeit des Sensors wiederhergestellt werden kann. Die Störbereiche können auch durch eine leichte Verschmutzung wie beispielsweise aufgrund von Staub hervorgerufen werden, bei welcher der Sensor grundsätzlich funktionsfähig bleibt, die Funktionsfähigkeit jedoch beispielsweise im Sinne einer Reichweitenreduzierung beeinträchtigt ist. Insbesondere derartige leichte Verschmutzungen können den gesamten Sichtbereich des Sensors betreffen und erfindungsgemäß durch Bewegen der Schutzabdeckung unschädlich gemacht werden.

Bei der optoelektronischen Erfassungseinrichtung handelt es sich vorzugsweise um einen Laserscanner, der in wenigstens einer einen Winkelbereich von bis zu 360° umfassenden Abtastebene einen Laserstrahl aussendet und für jede Richtung, in welcher der Laserstrahl innerhalb der Abtastebene ausgesandt wird, mittels eines Pulslaufzeitmeßverfahrens einen Entfernungswert sowie einen Winkelwert bezogen auf eine Sensorachse liefert.

Erfindungsgemäß ist vorgesehen, daß die Schutzabdeckung während des Betriebs des Sensors und insbesondere auch bei die Abtastbewegung ausführendem Sensor bewegbar ist. Um die Störbereiche unschädlich zu machen, braucht hierbei der Betrieb des Sensors und insbesondere dessen Abtastbewegung nicht unterbrochen zu werden.

Besonders bevorzugt ist es, wenn die Schutzabdeckung unabhängig von der Abtastbewegung des Sensors bewegbar ist.

Die Schutzabdeckung ist derart ausgebildet, daß die Störbereiche aus dem Sichtbereich des Sensors heraus bewegt werden können. Die Störbereiche können hierdurch in einen Bereich überführt werden, in den der Sensor während des Scanbetriebs niemals "blickt". In dieser Stellung können insbesondere bei laufendem Scanbetrieb die Störbereiche durch Reinigen der Schutzabdeckung beseitigt werden.

Des weiteren ist erfindungsgemäß vorgesehen, daß die Störbereiche innerhalb des Sichtbereiches des Sensors aus einer Region von besonderem Interesse des Sichtbereiches heraus bewegbar sind. Dies ist insbesondere dann von Vorteil, wenn lediglich bestimmte Regionen innerhalb des Sichtbereiches des Sensors, sogenannte Regionen von besonderem Interesse, beispielsweise zur Objekterkennung und/oder -verfolgung ausgewertet werden sollen und außerhalb dieser interessierenden Regionen, aber noch innerhalb des Sichtbereiches des Sensors gelegene Störbereiche in Kauf genommen werden können. Die Schutzabdeckung braucht hierbei nur so weit bewegt zu werden, daß die Störbereiche nicht mehr innerhalb der Regionen von besonderem Interesse gelegen sind.

Gemäß einer Ausführungsform der Erfindung ist die Schutzabdeckung in Abhängigkeit von der Lage einer sich insbesondere innerhalb des Sichtbereiches des Sensors zeitweise oder permanent bewegenden Region von besonderem Interesse derart bewegbar, daß die Störbereiche stets außerhalb der Region von besonderem Interesse gehalten sind. Hierdurch wird eine automatische Regelung der Bewegung der Schutzabdeckung realisiert, die sicherstellt, daß auch bei einer sich innerhalb des Sichtbereiches bewegenden Region von besonderem Interesse sich die Störbereiche stets außerhalb dieser Region befinden und folglich die Erfassung besonders interessierender Bereiche der Umgebung, z. B. die Erkennung und Verfolgung eines vorausfahrenden Fahrzeugs, nicht beeinträchtigt wird.

Vorzugsweise ist die Schutzabdeckung drehbar. Dabei fällt die Drehachse der Schutzabdeckung bevorzugt mit einer Rotationsachse des Sensors oder eines zur Ausführung der Abtastbewegung rotierenden Bauteils des Sensors zusammen. Bei diesem Bauteil handelt es sich insbesondere um einen Drehspiegel.

In einer besonders bevorzugten praktischen Ausgestaltung der Erfindung ist die Schutzabdeckung zumindest im wesentlichen rotationssymmetrisch ausgebildet. Hierdurch kann in vorteilhafter Weise erreicht werden, daß beim Durchtritt der Strahlung durch die Schutzabdeckung unabhängig von der Scanrichtung stets die gleichen geometrischen und damit optischen Verhältnisse herrschen.

Vorzugsweise ist die Schutzabdeckung haubenförmig ausgebildet. Ferner kann die Schutzabdeckung einen gegenüber der Ausbreitungsrichtung der Strahlung geneigten Durchtrittsbereich aufweisen. Bevorzugt weist die Schutzabdeckung eine Konusform auf. Bei Verwendung einer haubenförmigen Schutzabdeckung wird der Durchtrittsbereich insbesondere von einer umlaufenden Schutzwand der Schutzhaube gebildet. Vorzugsweise weist die Schutzhaube einen konusförmigen und/oder trapezförmigen Querschnitt auf, wobei die Schutzabdeckung mit einer geraden Durchtrittswand für die sich ausbreitende Strahlung versehen ist.

In einer alternativen Ausführungsform der Erfindung kann die Schutzabdeckung ein durch den Sichtbereich des Sensors hindurch bewegbares und insbesondere in Form einer Kunststofffolie vorgesehenes Schutzband aufweisen. Ein derartiges Schutzband kann nach Art eines Schreibmaschinenfarbbandes immer dann weiterbewegt werden, wenn die Ausbreitung der Strahlung beeinträchtigende Störbereiche auftreten. Vorzugsweise ist das Schutzband zumindest näherungsweise senkrecht zur Ausbreitungsrichtung der Strahlung bewegbar.

Prinzipiell kann es sich bei dem bewegbaren Schutzband um ein Endlosband handeln, das z. B. in außerhalb des Sichtbereiches des Sensors gelegenen Bereichen mittels geeigneter Reinigungseinrichtungen von Störbereiche bildenden Verschmutzungen befreit werden kann.

In einer bevorzugten Alternative dagegen weist das Schutzband eine im Vergleich zur Größe des Sichtbereiches des Sensors große Länge auf und ist an seinen Enden mit Wickeleinrichtungen verbunden. Die Wickeleinrichtungen dienen zum Auf- bzw. Abwickeln des Schutzbandes während einer zur Entfernung von Störbereichen dienenden Bewegung des Schutzbandes.

Gemäß einem weiteren bevorzugten Ausführungsbeispiel der Erfindung ist vorgesehen, daß in einem dem Sensor zugeordneten und insbesondere den Sensor aufnehmenden Bauteil ein Durchlaß für die Strahlung vorgesehen ist, in dessen Bereich die Schutzabdeckung angeordnet und der insbesondere durch die Schutzabdeckung zumindest im wesentlichen verschlossen ist.

Durch diese Anordnung der optoelektronischen Erfassungseinrichtung ist sichergestellt, daß die ausgesandte und empfangene Strahlung lediglich durch die Schutzabdeckung beeinflußt wird. Von Vorteil ist dies insbesondere bei Verwendung einer rotationssymmetrischen Schutzabdeckung, da hierbei für jede Abtastrichtung die gleichen geometrischen und damit optischen Verhältnisse vorliegen. Bei einem Sensor ohne erfindungsgemäße Schutzabdeckung, der in ein Bauteil z. B. eines Fahrzeugs integriert ist, wird die ausgesandte und empfangene Strahlung - sofern kein offener Durchlaß vorgesehen ist, wodurch der Sensor nicht vor äußeren Einflüssen geschützt wäre - durch das Fahrzeugbauteil beeinflußt, das grundsätzlich beliebig und ohne Rücksicht auf die Belange des Scanners geformt sein kann, so daß nicht ohne weiteres gewährleistet werden kann, daß für jede Abtastrichtung die gleichen Strahlungsausbreitungsbedingungen vorliegen.

In einer weiteren bevorzugten Ausführungsform der Erfindung ist vorgesehen, daß eine Antiverschmutzungseinrichtung zur Verhinderung, Hemmung und/oder Beseitigung von Verschmutzungen der Schutzabdeckung vorgesehen ist.

Bevorzugt ist es, wenn die Antiverschmutzungseinrichtung außerhalb des Sichtbereiches des Sensors angeordnet und/oder wirksam ist.

Die Antiverschmutzungseinrichtung kann in Form einer Reinigungseinrichtung vorgesehen sein, die auf die Schutzabdeckung mechanisch und/oder mit unter Druck ausgestoßenem Fluid einwirkt. Für eine mechanische Reinigung kommen insbesondere Bürsten, Abstreifer, Schaber und/oder Wischer in Frage, die direkt auf die Schutzabdeckung einwirken. Bei dem unter Druck ausgestoßenem Fluid handelt es sich insbesondere um Druckluft und/oder um einen oder mehrere Wasserstrahlen.

Alternativ oder zusätzlich kann erfindungsgemäß vorgesehen sein, daß mittels der Antiverschmutzungseinrichtung insbesondere mittels Druckluft ein Staudruck erzeugbar ist. Der Staudruck wird dabei insbesondere innerhalb der Schutzabdeckung und/oder an Randbereichen der Schutzabdeckung erzeugt. Durch den Staudruck können gezielt vorgebbare Bereiche z. B. innerhalb der Schutzabdeckung oder an Randbereichen der Schutzabdeckung vor dem Eindringen von Verunreinigungen geschützt werden.

Des weiteren kann erfindungsgemäß alternativ oder zusätzlich vorgesehen sein, daß mittels der Antiverschmutzungseinrichtung außerhalb der Schutzabdeckung und bevorzugt auf der Außenseite der Schutzabdeckung insbesondere mittels Druckluft und/oder eines Staudrucks eine Fluidströmung erzeugbar ist. Mit einer derartigen Fluidströmung kann das Auftreffen von Partikeln auf der Schutzabdeckung verhindert sowie ein sicherer Abtransport von anderenfalls zu einer Verschmutzung der Schutzabdeckung führenden Schmutzpartikeln gewährleistet werden.

Des weiteren kann erfindungsgemäß die Antiverschmutzungseinrichtung alternativ oder zusätzlich eine zumindest bereichsweise auf die Außenseite der Schutzabdeckung aufgebrachte Antihaft- und/ oder Antikratzbeschichtung umfassen.

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: schematisch in einer Seitenansicht eine Ausführungsform einer optoelektronischen Erfassungseinrichtung gemäß der Erfindung mit einem Laserscanner und einer Schutzabdeckung,
- Fig. 2: eine weitere Ausführungsform einer erfindungsgemäßen Erfassungseinrichtung in schematischer Draufsicht, und
- Fig. 3: in schematischer Draufsicht eine weitere Ausführungsform einer erfindungsgemäßen optoelektronischen Erfassungseinrichtung.

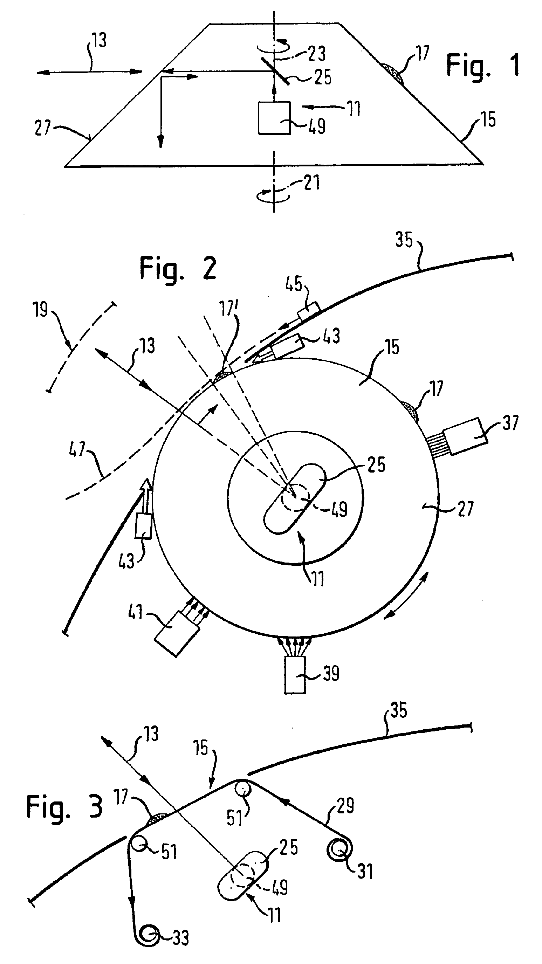

Die optoelektronische Erfassungseinrichtung gemäß Fig. 1 umfaßt einen Sensor 11 mit einer Strahlungsquelle 49 in Form einer Laserdiode und einer Strahlungsumlenkeinrichtung 25 in Form eines Drehspiegels, der um eine Achse 23 drehbar ist. Von der Laserdiode 49 ausgesandte Strahlungspulse werden über den Spiegel 25 in einen Überwachungsbereich ausgesandt und nach Reflexion von einem Objekt im Überwachungsbereich wiederum über den Spiegel 25 auf eine nicht dargestellte Empfangseinrichtung gelenkt, die mit einer Auswerteeinrichtung zur Auswertung der empfangenen Strahlung verbunden ist.

Zumindest der Drehspiegel 25 dieses Laserscanners befindet sich innerhalb einer haubenförmigen, rotationssymmetrischen Schutzabdeckung 15 aus für die verwendete Strahlung 13 durchlässigem Material wie beispielsweise transparentem Glas oder Kunststoff. Die Schutzhaube 15 ist um eine mit der Drehachse 23 des Spiegels 25 zusammenfallende Achse 21 rotierbar und hierzu mit einem nicht dargestellten Drehantrieb verbunden. Die Schutzhaube 15 kann unabhängig von der Rotation des Spiegels 25 gedreht werden.

Die Schutzhaube 15 weist eine Konusform mit einem trapezförmigen Querschnitt auf. Die Höhe der Schutzabdeckung 15 kann bezogen auf ihren Durchmesser klein sein, so daß die Schutzabdeckung 15 die Form einer konusförmigen Scheibe nach Art eines umgedrehten Tellers aufweist.

Der Durchlaßbereich für die ausgesandte und zu empfangene Strahlung 13 wird von einer geraden Schutzwand 27 gebildet, die geneigt zur Ausbreitungsrichtung der Strahlung 13 verläuft. Durch diese Schrägstellung der Austritts- und Eintrittswand 27 der Schutzabdeckung 15 wird in vorteilhafter Weise erreicht, daß nur ein vergleichsweise geringer Teil der ausgesandten und von der Innenwand der Schutzabdeckung 15 reflektierten Strahlung direkt auf den Spiegel 25 zurückgeworfen und der größere Teil der innen reflektierten Strahlung in unkritische Richtungen abgelenkt wird, wie es durch die unterschiedlich langen Pfeile in Fig. 1 angedeutet ist.

Aufgrund der von der Abtastbewegung des Scanners unabhängigen Bewegbarkeit der Schutzabdeckung 15 können Störbereiche 17, welche die Ausbreitung der ausgesandten und/oder zu empfangenen Strahlung 13 in einer bestimmten Stellung der Schutzabdeckung 15 relativ zum Drehspiegel 25 beeinträchtigen würden, in eine nichtstörende Position bewegt werden, in die der Sensor 11 während der Abtastbewegung niemals "blickt".

Fig. 2 zeigt eine Erfassungseinrichtung, die derart innerhalb eines Fahrzeugbauteils 35 wie z. B. eines Scheinwerfers, eines Außenspiegels oder einer Stoßstange des Fahrzeugs angeordnet ist, daß ein für die Ausbreitung der Strahlung 13 vorgesehener Durchlaß in dem Bauteil 35 durch die Schutzabdeckung 15 verschlossen ist. Durch die rotationssymmetrische Form der Schutzhaube 15 sind für jede Abtastrichtung innerhalb des durch das Bauteil 35 begrenzten Sichtbereiches des Sensors 11 die gleichen optischen Verhältnisse vorhanden.

Um das Eindringen von Schmutzpartikeln in das Bauteil 35 zu verhindern, kann zumindest bereichsweise z. B. mittels Druckluftquellen 43 ein Staudruck erzeugt werden. Es können Staudruckzonen geschaffen werden, die zum einen das Eindringen von Schmutzpartikeln in bestimmte zu schützende Bereiche verhindern und zum anderen derart über zumindest einigen Bereichen der Außenseite der Schutzabdeckung 15 gelegen sind, daß eine Ablagerung von Schmutzpartikeln auf der Schutzabdeckung 15 verhindert wird.

Ferner ist eine Druckluftquelle 45 vorgesehen, mit der eine auf der Außenseite der Schutzabdeckung 15 entlangstreichende Luftströmung 47 erzeugt wird, durch die Schmutzpartikel mitgerissen und hierdurch an einer Ablagerung auf der Schutzabdeckung 15 gehindert werden. Es ist alternativ oder zusätzlich möglich, mit Hilfe von passiven Elementen - z.B. im Fall eines an einem Fahrzeug angebrachten Scanners mit Hilfe von in geeigneter Weise angeordneten und geformten Karosseriebauteilen oder speziellen Strömungsformteilen - während des Fahrbetriebs zum Schmutzpartikelabtransport geeignete Luftströmungen zu erzeugen.

Fig. 2 zeigt außerdem eine Bürste 37 als Beispiel für eine mechanische Reinigungseinrichtung sowie eine Druckluftdüse 39 und eine Wasserstrahldüse 41 als Beispiele für eine fluidgestützte Reinigung. Mit derartigen Reinigungseinrichtungen können in außerhalb des Sichtbereiches des Sensors 11 gelegenen Bereichen störende Verschmutzungen 17 während des Abtastbetriebs beseitigt werden, indem die Schutzabdeckung 15 gedreht und folglich die verschmutzten Bereiche 17 an den einzelnen Reinigungsstationen 37, 39, 41 vorbei und dabei durch den Wirkungsbereich der Reinigungsstationen 37, 39, 41 hindurch bewegt werden.

Fig. 2 zeigt ferner, daß die Ausbreitung der Strahlung 13 beeinträchtigende Störbereiche 17' nicht aus dem Sichtbereich des Sensors 11 heraus bewegt werden müssen, sondern es zumindest für bestimmte Anwendungen genügt, wenn ein Störbereich 17' aus einer Region 19 von besonderem Interesse des Sichtbereiches heraus, d.h. in einen ausreichend großen Winkelabstand zu der Region 19 von besonderem Interesse, bewegt wird, jedoch noch innerhalb des Sichtbereiches des Sensors 11 verbleibt. Abweichend von der Anordnung eines Scanners innerhalb eines Bauteils 35 gemäß Fig. 2 kann der Sichtbereich des Scanners auch bis zu 360° betragen, so daß sich die Störbereiche unabhängig von der Stellung der Schutzabdeckung immer innerhalb des Sichtbereiches des Scanners befinden.

Die Region 19 von besonderem Interesse ist z.B. derjenige Teil des Sichtbereiches des Scanners 11, in dem sich ein erkanntes und zu verfolgendes Objekt wie beispielsweise ein vorausfahrendes Fahrzeug befindet.

Bei dem Störbereich 17' kann es sich beispielsweise um eine hartnäckige Verschmutzung oder um eine Beschädigung der Schutzabdeckung 15 handeln, die ohnehin nicht mittels der Reinigungseinrichtungen 37, 39, 41 beseitigt werden könnte.

Fig. 3 zeigt eine alternative Ausführungsform einer erfindungsgemäßen Schutzabdeckung 15. Die Schutzabdeckung 15 ist in Form eines bereichsweise um den Sensor 11 herumgeführten Schutzbandes 29 vorgesehen, das zur Beseitigung der Störwirkung von Störbereichen 17 nach Art eines Schreibmaschinenfarbbandes durch den Sichtbereich des Sensors 11 hindurch bewegt werden kann und dabei von Wickeleinrichtungen 31, 33 ab- bzw. aufgewickelt wird. Führungswalzen 51 sorgen für eine definierte Lage des Schutzbandes 29 relativ zum Sensor 11 innerhalb des Sichtbereiches des Sensors 11.

Auch das bewegbare Schutzband 29 gemäß Fig. 3 kann einen zur Strahlungsausbreitung vorgesehenen Durchlaß in einem Bauteil 35 z. B. eines Fahrzeugs zumindest teilweise verschließen und Antiverschmutzungseinrichtungen aufweisen, wie es z.B. in Verbindung mit Fig. 2 am Beispiel einer haubenartigen Schutzabdeckung beschrieben wurde, um eine Verschmutzung des Schutzbandes 29 zu verhindern, zu hemmen und/oder zu beseitigen.

Es wird hiermit ausdrücklich Bezug genommen auf die am gleichen Tag wie die vorliegende Anmeldung hinterlegte deutsche Patentanmeldung "Verfahren zur Objekterkennung und/oder -verfolgung" (Anwaltsaktenzeichen: S 7862 DE 10151979.6) der Anmelderin, in der die insbesondere situations-, gefährdungs- und/oder verschmutzungsabhängige Bewegbarkeit einer Schutzabdeckung beschrieben ist und deren Inhalt hiermit durch Bezugnahme zum Inhalt auch der vorliegenden Anmeldung gemacht wird.

### Bezugszeichenliste

- 11: Sensor
- 13: Strahlung
- 15: Schutzabdeckung
- 17, 17': Störbereiche
- 19: Region von besonderem Interesse
- 21: Drehachse
- 23: Rotationsachse
- 25: rotierendes Bauteil, Drehspiegel
- 27: Durchtrittsbereich, geneigte Schutzwand
- 29: Schutzband
- 31: Wickeleinrichtung
- 33: Wickeleinrichtung
- 35: Bauteil
- 37: Reinigungseinrichtung
- 39: Reinigungseinrichtung
- 41: Reinigungseinrichtung
- 43: Einrichtung zur Staudruckerzeugung
- 45: Einrichtung zur Fluidströmungserzeugung
- 47: Fluidströmung
- 49: Strahlungsquelle
- 51: Führungswalze

## Patentansprüche

1. Optoelektronische Erfassungseinrichtung, insbesondere Laserscanner, mit zumindest einem Sensor (11) zur Aussendung von insbesondere gepulster elektromagnetischer Strahlung (13) in einen Überwachungsbereich und zum Empfang von aus dem Überwachungsbereich reflektierter Strahlung (13), und einer den Sensor (11) zumindest teilweise umgebenden und wenigstens bereichsweise für die verwendete Strahlung (13) durchlässigen Schutzabdeckung (15), die relativ zum Sensor (11) derart bewegbar ist, daß die Ausbreitung der vom Sensor (11) ausgesandten und/oder zu empfangenen Strahlung (13) beeinträchtigende Störbereiche (17, 17') der Schutzabdeckung (15) in eine nichtstörende Position bewegbar sind,
**dadurch gekennzeichnet,**
**dass** der Sensor (11) zur Ausführung einer Abtastbewegung ausgebildet ist, und
**dass** die Schutzabdeckung (15) derart bewegbar ist, dass die Störbereiche (17, 17') der Schutzabdeckung (15) während der Abtastbewegung des Sensors (11) außerhalb einer Region (19) von besonderem Interesse, die innerhalb des Sichtbereiches liegt, verbleiben.

2. Einrichtung nach Anspruch 1,
**dadurch gekennzeichnet,**
**daß** die Schutzabdeckung (15) unabhängig von der Abtastbewegung des Sensors (11) bewegbar ist.

3. Einrichtung nach einem der vorhergehenden Ansprüche,
**dadurch gekennzeichnet,**
**daß** die Schutzabdeckung (15) in Abhängigkeit von der Lage einer sich insbesondere innerhalb des Sichtbereiches des Sensors (11) zeitweise oder permanent bewegenden Region (19) von besonderem Interesse derart bewegbar ist, daß die Störbereiche (17') stets außerhalb der Region (19) von besonderem Interesse gehalten sind.

4. Einrichtung nach einem der vorhergehenden Ansprüche,
**dadurch gekennzeichnet,**
**daß** die Schutzabdeckung (15) drehbar ist.

5. Einrichtung nach einem der vorhergehenden Ansprüche,
**dadurch gekennzeichnet,**
**daß** eine Drehachse (21) der Schutzabdeckung (15) mit einer Rotationsachse (23) des Sensors (11) oder eines zur Ausführung der Abtastbewegung rotierenden Bauteils (25), insbesondere eines Drehspiegels, des Sensors (11) zusammenfällt.

6. Einrichtung nach einem der vorhergehenden Ansprüche,
**dadurch gekennzeichnet,**
**daß** die Schutzabdeckung (15) zumindest im wesentlichen rotationssymmetrisch ausgebildet ist.

7. Einrichtung nach einem der vorhergehenden Ansprüche,
**dadurch gekennzeichnet,**
**daß** die Schutzabdeckung (15) haubenförmig ausgebildet ist und insbesondere eine Konusform aufweist.

8. Einrichtung nach einem der vorhergehenden Ansprüche,
**dadurch gekennzeichnet,**
**daß** die Schutzabdeckung (15) einen gegenüber der Ausbreitungsrichtung der Strahlung (13) geneigten Durchtrittsbereich (27) aufweist, der insbesondere von einer Schutzwand einer vorzugsweise konusförmigen und/oder einen trapezförmigen Querschnitt aufweisenden Schutzhaube gebildet ist.

9. Einrichtung nach einem der vorhergehenden Ansprüche,
**dadurch gekennzeichnet,**
**daß** die Schutzabdeckung (15) ein durch den Sichtbereich des Sensors (11) hindurch bewegbares und insbesondere in Form einer Kunstofffolie vorgesehenes Schutzband (29) aufweist.

10. Einrichtung nach Anspruch 9,
**dadurch gekennzeichnet,**
**daß** das Schutzband (29) zumindest näherungsweise senkrecht zur Ausbreitungsrichtung der Strahlung (13) bewegbar ist.

11. Einrichtung nach Anspruch 9 oder 10,
**dadurch gekennzeichnet,**
**daß** Wickeleinrichtungen (31, 33) zum Auf- und Abwickeln des Schutzbandes (29) vorgesehen sind.

12. Einrichtung nach einem der vorhergehenden Ansprüche,
**dadurch gekennzeichnet,**
**daß** in einem dem Sensor (11) zugeordneten und insbesondere den Sensor (11) aufnehmenden Bauteil (35), insbesondere einem Scheinwerfer, einem Außenspiegel und/oder einer Stoßstange eines Fahrzeugs, ein Durchlaß für die Strahlung (13) vorgesehen ist, in dessen Bereich die Schutzabdeckung (15) angeordnet und der insbesondere durch die Schutzabdeckung (15) zumindest im wesentlichen verschlossen ist.

13. Einrichtung nach einem der vorhergehenden Ansprüche,
**dadurch gekennzeichnet,**
**daß** eine Antiverschmutzungseinrichtung (37,39,41,43,45) zur Verhinderung, Hemmung und/oder Beseitigung von Verschmutzungen der Schutzabdeckung (15) vorgesehen ist.

14. Einrichtung nach Anspruch 13,
**dadurch gekennzeichnet,**
**daß** die Antiverschmutzungseinrichtung (37,39,41,43,45) außerhalb des Sichtbereiches des Sensors (11) angeordnet und/oder wirksam ist.

15. Einrichtung nach Anspruch 13 oder 14,
**dadurch gekennzeichnet,**
**daß** die Antiverschmutzungseinrichtung in Form einer Reinigungseinrichtung (37, 39, 41) vorgesehen ist, die auf die Schutzabdeckung (15) mechanisch, insbesondere mittels Bürsten, Abstreifern, Schabern und/oder Wischern, und/oder mit unter Druck ausgesto-ßenem Fluid, insbesondere mittels Druckluft und/oder eines oder mehrerer Wasserstrahlen, einwirkt.

16. Einrichtung nach einem der Ansprüche 13 bis 15,
**dadurch gekennzeichnet,**
**daß** insbesondere innerhalb der Schutzabdeckung (15) und/oder an Randbereichen der Schutzabdeckung (15) mittels der Antiverschmutzungseinrichtung (43) insbesondere mittels Druckluft ein Staudruck erzeugbar ist.

17. Einrichtung nach einem der Ansprüche 13 bis 16,
**dadurch gekennzeichnet,**
**daß** mittels der Antiverschmutzungseinrichtung (45) außerhalb der Schutzabdeckung (15) und bevorzugt auf der Außenseite der Schutzabdeckung (15) insbesondere mittels Druckluft und/oder eines Staudrucks eine Fluidströmung (47) erzeugbar ist.

18. Einrichtung nach einem der Ansprüche 13 bis 17,
**dadurch gekennzeichnet,**
**daß** die Antiverschmutzungseinrichtung eine zumindest bereichsweise auf die Außenseite der Schutzabdeckung (15) aufgebrachte Antihaft- und/oder Antikratzbeschichtung umfaßt.

## Claims

1. An optoelectronic detection device, in particular a laser scanner, having at least one sensor (11) for the transmission of electromagnetic radiation (13), in particular pulsed electromagnetic radiation, into a monitored zone and for the reception of radiation (13) reflected out of the monitored zone and having a protective cover (15) which at least partly surrounds the sensor (11), is permeable at least regionally for the radiation (13) used and is movable relative to the sensor (11) such that the extent of the interference regions (17, 17') of the protective cover (15) impairing radiation transmitted from and/or to be received by the sensor (11) can be moved into a non-interfering position,
**characterised in that**
the sensor (11) is made for the carrying out of a scanning movement; and
**in that** the protective cover (15) is movable such that the interference regions (17, 17') of the protective cover (15) remain outside a region (19) of particular interest lying inside the range of view during the scanning movement of the sensor (11).

2. A device in accordance with claim 1, **characterised in that** the protective cover (15) is movable independently of the scanning movement of the sensor (11) .

3. A device in accordance with any one of the preceding claims, **characterised in that** the protective cover (15) is movable in dependence on the position of a region (19) of particular interest in particular moving inside the visual region of the sensor (11) at times or permanently such that the interference regions (17') are always held outside the region (19) of particular interest.

4. A device in accordance with any one of the preceding claims, **characterised in that** the protective cover (15) is rotatable.

5. A device in accordance with any one of the preceding claims, **characterised in that** an axis of rotation (21) of the protective cover (15) coincides with an axis of rotation (23) of the sensor (11) or of a component (25) of the sensor (11), in particular a rotating mirror, which rotates to carry out the scanning movement.

6. A device in accordance with any one of the preceding claims, **characterised in that** the protective cover (15) is made at least substantially rotationally symmetrical.

7. A device in accordance with any one of the preceding claims, **characterised in that** the protective cover (15) is made in the manner of a hood and in particular has a conical shape.

8. A device in accordance with any one of the preceding claims, **characterised in that** the protective cover (15) has a passage region (27) which is inclined with respect to the direction of propagation of the radiation (13) and which is in particular formed by a protective wall of a protective hood which is preferably conical and/or has a trapezoidal cross-section.

9. A device in accordance with any one of the preceding claims, **characterised in that** the protective cover (15) has a protective strip (29) movable through the range of view of the sensor (11) and in particular provided in the form of a plastic film.

10. A device in accordance with claim 9, **characterised in that** the protective strip (29) is movable at least approximately perpendicular to the direction of propagation of the radiation (13).

11. A device in accordance with claim 9 or claim 10, **characterised in that** winding devices (31, 33) are provided for the winding up and unwinding of the protective strip (29).

12. A device in accordance with any one of the preceding claims, **characterised in that** a passage for the radiation (13) is provided in a component (35), in particular a headlamp, a side mirror and/or a bumper of a vehicle, associated with the sensor (11) and in particular receiving the sensor (11), with the protective cover (15) being arranged in the region of said passage and said passage in particular being at least substantially closed by the protective cover (15).

13. A device in accordance with any one of the preceding claims, **characterised in that** an anti-contamination device (37, 39, 41, 43, 45) is provided for the prevention, inhibition and/or elimination of contaminants of the protective cover (15).

14. A device in accordance with claim 13, **characterised in that** the anti-contamination device (37, 39, 41, 43, 45) is arranged and/or is effective outside the range of view of the sensor (11).

15. A device in accordance with claim 13 or claim 14, **characterised in that** the anti-contamination device is provided in the form of a cleaning device (37, 39, 41) which acts on the protective cover (15) mechanically, in particular by means of brushes, strippers, scrapers and/or wipers, and/or using fluid discharged under pressure, in particular by means of compressed air and/or of one or more water jets.

16. A device in accordance with any one of the claims 13 to 15, **characterised in that** a dynamic head can in particular be generated inside the protective cover (15) and/or at marginal regions of the protective cover (15) by means of the anti-contamination device (43), in particular by means of compressed air.

17. A device in accordance with any one of the claims 13 to 16, **characterised in that** a fluid flow (47) can be generated by means of the anti-contamination device (45) outside the protective cover (15) and preferably on the outer side of the protective cover (15), in particular by means of compressed air and/or of a dynamic head.

18. A device in accordance with any one of the claims 13 to 17, **characterised in that** the anti-contamination device comprises an anti-stick and/or anti-scratch coating applied at least regionally to the outer side of the protective cover (15).

## Revendications

1. Dispositif de détection optoélectronique, en particulier scanner laser, comportant au moins un capteur (11) pour l'émission de rayonnement (13) électromagnétique, en particulier pulsé dans une zone de surveillance et pour la réception de rayonnement (13) réfléchi depuis la zone de surveillance, et un capuchon de protection (13) entourant au moins partiellement le capteur (11) et transparent au moins par régions pour le rayonnement (13) utilisé, capuchon de protection qui peut être déplacé par rapport au capteur (11) de telle sorte que des zones gênantes (17, 17') du capuchon de protection (15) gênant la propagation de rayonnement émis et/ou à recevoir par le capteur (11) peuvent être déplacées jusque dans une position non gênante,
**caractérisé en ce que**
le capteur (11) est réalisé pour effectuer un mouvement de balayage, et **en ce que** le capuchon de protection (15) peut être déplacé de telle sorte que les zones gênantes (17, 17') du capuchon de protection (15) restent pendant le mouvement de balayage du capteur (11) en dehors d'une région (19) d'intérêt particulier qui est située à l'intérieur de la zone de visée.

2. Dispositif selon la revendication 1,
**caractérisé en ce que**
le capuchon de protection (15) peut être déplacé indépendamment du mouvement de balayage du capteur (11).

3. Dispositif selon l'une des revendications précédentes,
**caractérisé en ce que**
le capuchon de protection (15) peut être déplacé en fonction de la position d'une région (19) d'intérêt particulier, en mouvement temporaire ou permanent, de telle sorte que les zones gênantes (17') sont toujours maintenues en dehors de la région (19) d'intérêt particulier.

4. Dispositif selon l'une des revendications précédentes,
**caractérisé en ce que**
le capuchon de protection (15) est rotatif.

5. Dispositif selon l'une des revendications précédentes,
**caractérisé en ce que**
un axe de rotation (21) du capuchon de protection (15) coïncide avec un axe de rotation (23) du capteur (11) ou d'un composant (25) tournant pour exécuter le mouvement de balayage, en particulier d'un miroir tournant, du capteur (11).

6. Dispositif selon l'une des revendications précédentes,
**caractérisé en ce que**
le capuchon de protection (15) est réalisé au moins sensiblement à symétrie de révolution.

7. Dispositif selon l'une des revendications précédentes,
**caractérisé en ce que**
le capuchon de protection (15) est réalisé en forme de calotte et présente en particulier une forme conique.

8. Dispositif selon l'une des revendications précédentes,
**caractérisé en ce que**
le capuchon de protection (15) présente une zone de passage (27) inclinée par rapport à la direction de propagation du rayonnement (30), qui est formée en particulier par une paroi de protection d'une calotte de protection présentant une section transversale de préférence en forme de cône et/ou en forme de trapèze.

9. Dispositif selon l'une des revendications précédentes,
**caractérisé en ce que**
le capuchon de protection (15) présente une bande de protection (29) déplaçable à travers la région de visée du capteur (11) et prévue en particulier sous la forme d'une feuille de matière plastique.

10. Dispositif selon la revendication 9,
**caractérisé en ce que**
la bande de protection (29) est déplaçable au moins approximativement perpendiculairement à la direction de propagation du rayonnement (13).

11. Dispositif selon la revendication 9 ou 10,
**caractérisé en ce que**
des enrouleurs (31, 33) sont prévus pour enrouler et dérouler la bande de protection (29).

12. Dispositif selon l'une des revendications précédentes,
**caractérisé en ce que**
dans un composant (35) associé au capteur (11) et recevant en particulier le capteur (11), en particulier un projecteur, un rétroviseur extérieur et/ou ou un pare-chocs d'un véhicule est prévu un passage pour le rayonnement (13) dans la région duquel est agencé le capuchon de protection (15) et qui est au moins sensiblement fermé en particulier par le capuchon de protection (15).

13. Dispositif selon l'une des revendications précédentes,
**caractérisé en ce que**
il est prévu un dispositif anti-encrassement (37, 39, 41, 43, 45) pour empêcher, inhiber et/ou éliminer des encrassements du capuchon de protection (15).

14. Dispositif selon la revendication 13,
**caractérisé en ce que**
le dispositif anti-encrassement (37, 39, 41, 43, 45) est agencé et/ou actif en dehors de la zone de visée du capteur (11).

15. Dispositif selon la revendication 13 ou 14,
**caractérisé en ce que**
le dispositif anti-encrassement est prévu sous la forme d'un dispositif de nettoyage (37, 39, 41) qui agit mécaniquement sur le capuchon de protection (15), en particulier au moyen de brosses, de racloirs, de grattoirs et/ou d'essuyeurs, et/ou avec un fluide éjecté sous pression, en particulier au moyen d'air comprimé et/ou d'un ou de plusieurs jets d'eau.

16. Dispositif selon l'une des revendications 13 à 15,
**caractérisé en ce que**
une pression dynamique peut être engendrée à l'intérieur du capuchon de protection (15) et/ou sur les régions de bord du capuchon de protection (15) au moyen du dispositif anti-encrassement (43), en particulier au moyen d'air comprimé.

17. Dispositif selon l'une des revendications 13 à 16,
**caractérisé en ce que**
un écoulement fluidique (47) peut être engendré au moyen du dispositif anti-encrassement (45) en dehors du capuchon de protection (15) et de préférence sur la face extérieure du capuchon de protection (15), en particulier au moyen d'air comprimé et/ou d'une pression dynamique.

18. Dispositif selon l'une des revendications 13 à 17,
**caractérisé en ce que**
le dispositif anti-encrassement comprend un revêtement antiadhésif et/ou anti-rayure appliqué au moins par régions sur la face extérieure du capuchon de protection (15).
